(19) Europäisches Patentamt / European Patent Office / Office européen des brevets

(11) **EP 4 330 086 B1**

(12) **FASCICULE DE BREVET EUROPEEN**

(45) Date de publication et mention
de la délivrance du brevet:
**16.04.2025   Bulletin 2025/16**

(21) Numéro de dépôt: **22726113.8**

(22) Date de dépôt: **28.04.2022**

(51) Classification Internationale des Brevets (IPC):
**B60R 16/00** *(2006.01)*      **B60R 16/02** *(2006.01)*

(52) Classification Coopérative des Brevets (CPC):
**B60R 16/02; B60W 50/0205;** B60W 60/005;
B60W 2050/021; B60W 2540/215

(86) Numéro de dépôt international:
**PCT/EP2022/061413**

(87) Numéro de publication internationale:
**WO 2022/229352 (03.11.2022 Gazette 2022/44)**

(54) **DISPOSITIF DE SÉLECTION DU MODE DE CONDUITE D'UN VÉHICULE AUTOMOBILE AUTONOME**

VORRICHTUNG ZUR AUSWAHL DES FAHRMODUS EINES AUTONOMEN KRAFTFAHRZEUGS

DEVICE FOR SELECTING THE DRIVING MODE OF AN AUTONOMOUS MOTOR VEHICLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:   **29.04.2021   FR 2104499**

(43) Date de publication de la demande:
**06.03.2024   Bulletin 2024/10**

(73) Titulaires:
• **Ampere SAS
92100 Boulogne-Billancourt (FR)**

• **NISSAN MOTOR CO., LTD.
Kanagawa 221-0023 (JP)**

(72) Inventeur: **REYSS, Bertrand
78084 Guyancourt Cedex (FR)**

(74) Mandataire: **Renault Group
Renault s.a.s.
1 avenue du Golf
FR TCR AVA 055
78084 Guyancourt Cedex (FR)**

(56) Documents cités:
**EP-B1- 3 240 712      FR-A1- 3 022 637**

**Description**

L'invention concerne un dispositif d'acquisition de commande d'un véhicule autonome, en particulier un dispositif de sélection du mode de conduite d'un véhicule automobile autonome.

Dans le domaine des véhicules automobiles, les véhicules autonomes sont des véhicules aptes à se mouvoir et à se diriger de manière automatisée sans l'assistance du conducteur. Autrement dit, un véhicule autonome est conduit par un calculateur embarqué, prenant les décisions de commande en fonction de capteurs externes tels que des radars, lidars, en fonction de sa dynamique obtenue par des capteurs tels que des accéléromètres et gyroscopes, en fonction de la connaissance de la route obtenue par des moyens de cartographie embarqués, et en fonction de sa position géographique obtenue par exemple par GPS.

Un véhicule autonome doit toutefois avoir la capacité d'être conduit par un conducteur humain. Aussi le conducteur doit avoir la possibilité de déclencher le pilotage automatique ou de reprendre la main.

À cet effet, il est nécessaire qu'une interface de commande soit apte à permettre au conducteur de décider manuellement s'il souhaite entrer ou sortir du mode autonome à tout moment.

Étant donné que cette commande présente une importance majeure de sécurité, il est nécessaire de sécuriser de manière optimale la transmission de la commande d'activation ou de désactivation du mode autonome.

On connaît notamment le document EP3240712B1 qui décrit un schéma électrique d'un système de commande d'activation ou de désactivation du mode autonome qui comprend l'activation, par un contrôleur électronique, du mode de conduite autonome lorsqu'à la fois un premier bouton et un second bouton sont sélectionnés pendant plus d'une première durée prédéterminée évitant ainsi l'activation ou la désactivation involontaire du mode de conduite autonome.

Toutefois, la solution proposée par ce document, à deux interrupteurs, ne permet pas de détecter une éventuelle défaillance de ce système de commande.

Aussi, il existe le besoin d'un système de commande améliorée apte à autodétecter une éventuelle défaillance du montage électronique de commande de l'entrée ou de la sortie du mode de conduite autonome.

À cet effet, on propose un dispositif de sélection du mode de conduite d'un véhicule automobile autonome, comprenant au moins un interrupteur de commande, le dispositif comprenant un calculateur apte à détecter la pression dudit interrupteur.

Le dispositif inclut un montage électrique dans lequel ledit interrupteur est connecté en série à une première résistance, une résistance de sécurité étant connectée en parallèle dudit interrupteur et de ladite première résistance, ledit montage électrique étant connecté d'une part à une source de tension continue du calculateur et d'autre part à une masse du calculateur, de sorte que la résistance équivalente du montage électrique permet de déterminer d'une part si l'interrupteur est fermé ou ouvert et d'autre part une potentielle défaillance dudit montage électrique.

Ainsi, la présence de la résistance de sécurité apporte une sécurité optimisée pour s'assurer que le calculateur soit apte à détecter une défaillance du dispositif de sélection du mode de conduite.

Avantageusement et de manière non limitative, ledit montage électrique comprend un deuxième interrupteur connecté en série avec une deuxième résistance, ledit deuxième interrupteur et ladite deuxième résistance étant connectés d'une part en parallèle du premier interrupteur et de la première résistance, et d'autre part en parallèle de ladite résistance de sécurité, de sorte que la résistance équivalente du montage électrique permet en outre de déterminer si le deuxième interrupteur est fermé ou ouvert, simultanément ou non avec le premier interrupteur. Ainsi, le dispositif est adapté à fonctionner avec deux interrupteurs, ce qui permet d'obtenir une sécurité accrue dans le changement de mode de conduite.

En outre un tel montage à deux interrupteurs ne présente que deux raccordements au calculateur : la connexion à la masse et la connexion de tension continue, permettant de mesurer la résistance équivalente par le calculateur. Aussi les risques de défaillances électriques, notamment les risques de câbles sectionnés, sont réduits par rapport à l'art antérieur ou il y avait le double de câbles de connexions au calculateur.

Avantageusement, le dispositif comprend des moyens permettant, lorsque la résistance équivalente est égale à la valeur de ladite résistance de sécurité, de détecter que les deux interrupteurs sont ouverts. Ainsi, par la mesure de la résistance équivalente vue du calculateur, on peut déterminer de manière simple si les interrupteurs sont tous les deux ouverts.

Avantageusement, le dispositif comprend des moyens permettant, lorsque ladite résistance équivalente est égale à une valeur infinie, de détecter une défaillance liée à un circuit ouvert. Ainsi, par la mesure de la résistance équivalente vue du calculateur, on peut déterminer de manière simple s'il existe une défaillance de circuit ouvert du montage électrique.

Avantageusement, le dispositif comprend des moyens permettant, lorsque la résistance équivalente est nulle, de détecter un court-circuit à la masse ou à la source de tension continue. Ainsi, par la mesure de la résistance équivalente vue du calculateur, on peut déterminer de manière simple si le dispositif est en court-circuit.

L'invention concerne aussi un calculateur embarqué dans un véhicule automobile autonome, adapté pour détecter, en fonction d'une valeur de résistance mesurée, si le dispositif de sélection connecté est un dispositif de sélection comprenant un seul interrupteur, ou si le dispositif de sélection connecté est un dispositif de sélection comprenant deux interrupteurs.

L'invention concerne aussi un volant de direction pour un véhicule automobile comprenant un calculateur embarqué et un dispositif de sélection tel que décrit précédemment.

L'invention concerne aussi un véhicule automobile comprenant un volant de direction tel que décrit précédemment.

D'autres particularités et avantages de l'invention ressortiront à la lecture de la description faite ci-après de modes de réalisation particuliers de l'invention, donnés à titre indicatif, mais non limitatifs, en référence aux dessins annexés sur lesquels :

[Fig.1] est une vue schématique d'une disposition selon un premier mode de réalisation de l'invention ; et
[Fig. 2] est une représentation de deux montages électriques alternatifs d'un dispositif selon un deuxième mode de réalisation de l'invention.

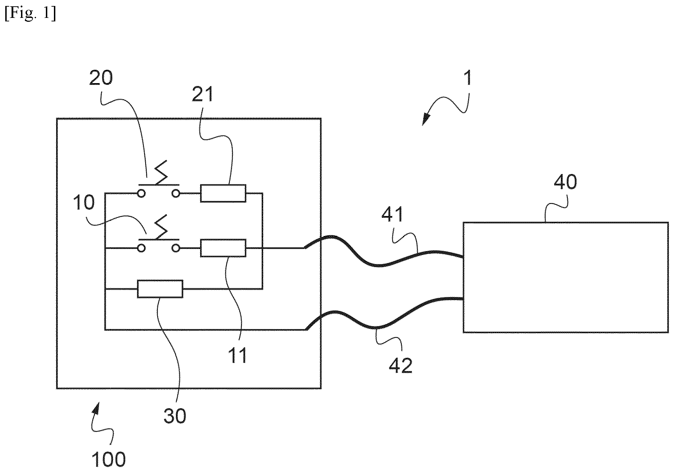

En référence à la figure 1, selon un premier mode de réalisation de l'invention, un véhicule automobile autonome comprend un volant de direction présentant des moyens de sélection du mode de conduite, permettant d'enclencher la conduite autonome, ou désactivant la conduite autonome.

Ces moyens de sélection comprenant deux interrupteurs 10, 20, installés chacun sur le volant de direction de sorte à pouvoir être activé l'un par la main gauche du conducteur et l'autre par la main droite du conducteur.

Lorsque les deux interrupteurs sont pressés simultanément pendant une durée prédéterminée, par exemple 1 à 3 secondes, alors un calculateur embarqué, intégré au volant de direction, détecte une commande de changement d'état du mode de conduite.

Par conséquent, lorsque les deux interrupteurs 10, 20 sont maintenus fermés pendant la durée prédéterminée, si le mode de conduite en cours était le mode autonome, alors le véhicule bascule en mode de conduite manuelle, et inversement.

Lorsque les deux interrupteurs 10, 20 sont relâchés, ou lorsqu'un seul des interrupteurs est relâché alors le sélecteur est dans une position de repos, indiquant qu'aucune action de changement au mode de conduite n'est demandée par le conducteur.

Le dispositif de sélection 1 présente un montage électrique 100 dans lequel un premier interrupteur 10 est monté en série avec une première résistance 11, aussi notée Rsw1, formant une première branche du montage.

Le deuxième interrupteur 20 est monté en série avec une deuxième résistance 21, aussi notée Rsw2, formant une deuxième branche du montage 100.

La première branche et la deuxième branche sont en parallèle l'une de l'autre.

Enfin une résistance de sécurité 30, aussi notée $R_{AD}$ est montée à parallèle des premières et deuxièmes branches.

Ce montage est connecté d'une part à la masse 42 du calculateur embarqué 40 et d'autre part à une tension continue 41, aussi notée $V_{BAT}$, du calculateur 40.

Dans ce mode de réalisation la tension continue est d'une valeur de 5 V.

Ainsi, vu du calculateur on peut calculer une résistance équivalente Re de ce montage sous la forme :

[Math 1]

$$Re = \frac{1}{\dfrac{1}{R_{sw1}} + \dfrac{1}{R_{sw2}} + \dfrac{1}{R_{AD}}}$$

Cette valeur de résistance équivalente Re permet ainsi au calculateur de déterminer d'une part quels sont les états des deux interrupteurs et permet en outre de détecter une éventuelle défaillance du montage 100.

Dans cet exemple en prenant les valeurs de résistance :

$$R_{SW1} = 560 \ \Omega$$

$$R_{SW2} = 560 \ \Omega$$

$$R_{AD} = 6,8\ k\Omega$$

Par le calcul de la résistance équivalente Re, vu du calculateur, avec ces valeurs de résistances prédéterminées, le calculateur 40 est apte à déterminer l'état du montage selon le tableau suivant :

[Table 1]

| État réel du montage | Valeur de résistance équivalente Re | État détecté par le calculateur en fonction de Re |
|---|---|---|
| Court-circuit tension continue Vbat | 0 Ω | Erreur mode autonome court-circuit |
| Circuit ouvert | ∞ | Erreur mode autonome circuit ouvert |
| Interrupteurs ouverts | 6,8 kΩ | Changement de mode de conduite non enclenché |
| Premier interrupteur ouvert et deuxième interrupteur fermé | 517 Ω | Erreur mode autonome, sélection incomplète |
| Deuxième interrupteur ouvert et premier interrupteur fermé | 517 Ω | Erreur mode autonome, sélection incomplète |
| Deux interrupteurs fermés | 269 Ω | Changement de mode de conduite enclenché |
| Court-circuit à la masse | 0 Ω | Erreur mode autonome court-circuit |

On comprend de ce tableau que le montage selon l'invention et les valeurs de résistances choisies, dans lesquelles en particulier la résistance de sécurité $R_{AD}$ est d'une valeur au moins 10 fois plus grande que les première et deuxième résistances, permet au calculateur de déterminer en fonction de la résistance équivalente Re l'état du montage électrique 100 et notamment d'éventuelles défaillances en court-circuit ou circuit ouvert du montage 100.

Selon une mise en œuvre particulière de ce mode de réalisation, la première résistance et la deuxième résistance peuvent être aussi d'une valeur distincte de sorte que le calculateur soit apte à déterminer quel est l'interrupteur fermé lorsqu'un seul interrupteur est détecté comme fermé.

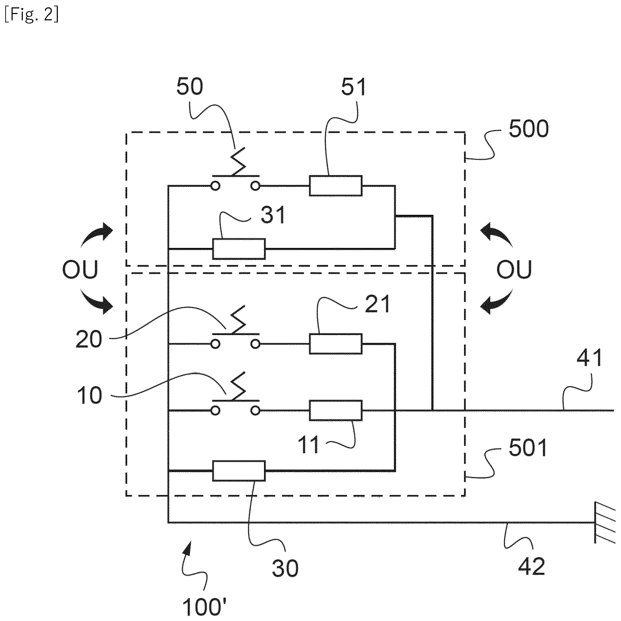

Selon un deuxième mode de réalisation de l'invention, en référence à la figure 2, il arrive qu'un unique calculateur 41 soit monté sur différents modèles de véhicule automobile.

Aussi, par exemple un même calculateur pourra être mis en œuvre pour un modèle urbain d'un véhicule automobile et pour un modèle sportif d'un autre véhicule automobile.

Dans ce cas, des différences peuvent exister, dont le changement manuel de mode de conduite. Ici, pour le modèle sportif la commande manuelle de changement de mode de conduite autonome s'effectue par un seul interrupteur 50, tandis que pour le modèle urbain la commande s'effectue par la pression simultanée de deux interrupteurs 10,20 tel qu'exposé au premier mode de réalisation.

Le schéma de la figure 2 est une vue superposant deux montages 100' différents qui ne sont pas présents en même temps dans un même véhicule, seul le montage supérieur 500 ou le montage inférieur 501 est présent dans un véhicule.

Ainsi à titre d'exemple le modèle sportif comprend le montage supérieur 500 à un unique interrupteur 50, tandis que le modèle urbain comprend le montage inférieur 501, identique au premier mode de réalisation de l'invention.

L'objectif est de permettre au calculateur de détecter d'une part quel est le montage présent et d'autre part de détecter une commande de changement de mode de conduite et d'éventuelles défaillances du montage électrique.

À cet effet, le montage supérieur 500 possède un seul interrupteur 50 et une résistance 51, aussi notée Rsw3, en série avec l'interrupteur 50. Le montage supérieur 500 comprend aussi une résistance de sécurité 31 en parallèle de l'interrupteur 50 et de la résistance 51.

Ce montage supérieur 500 étant connecté au calculateur 50, d'une part à la masse du calculateur 42 et d'autre part à une source de tension continue $V_{BAT}$, par exemple à 5V, du calculateur 41.

Dans ce montage supérieur 500, les résistances ont les valeurs suivantes :

La résistance de sécurité $R_{RS}$ = 2,7 kΩ

la résistance 51 Rsw3 = 1,5 kΩ.

Le montage inférieur 501 est quant à lui identique au premier mode de réalisation et les valeurs de résistances sont les mêmes que pour ce premier mode de réalisation.

Ainsi, vu du calculateur 40, la mesure de la résistance équivalente Re permet de détecter les différents états :

[Table 2]

| État réel du montage | Résistance équivalente Re | Montage détecté | État détecté par le calculateur en fonction de Re |
|---|---|---|---|
| Court-circuit tension continue $V_{BAT}$ | 0 Ω | Indifférent | Erreur Mode autonome — court-circuit |
| Circuit ouvert | ∞ | Indifférent | Erreur Mode autonome — circuit ouvert |
| Interrupteurs ouverts | 6,8 kΩ | Montage inférieur | Sélection de changement de mode de conduite non enclenché |
| Premier interrupteur ouvert et deuxième interrupteur fermé | 517 Ω | Montage inférieur | Erreur mode autonome, sélection incomplète |
| Deuxième interrupteur ouvert et premier interrupteur fermé | 517 Ω | Montage inférieur | Erreur mode autonome, sélection incomplète |
| Deux interrupteurs fermés | 269 Ω | Montage inférieur | Changement de mode de conduite enclenché |
| Court-circuit à la masse | 0 Ω | Indifférent | Erreur Mode autonome — court-circuit |
| Contact ouvert RS | 2,7 kΩ | Montage supérieur | Changement de mode de conduite non enclenché |
| RS fermé | 965 Ω | Montage supérieur | Sélection du changement de mode de conduite enclenché |

Ainsi, on comprend que le calculateur 40, même ignorant au préalable quel est le montage intégré au véhicule peut déterminer d'une part quel est le montage installé dans le véhicule automobile, quels sont les interrupteurs fermés, et d'éventuelles défaillances du montage, court-circuit ou circuit ouvert.

Ainsi on comprend de l'invention que le choix particulier des valeurs de résistances, où :

- les résistances de sécurité sont plus importantes que les résistances associées aux interrupteurs, par exemple entre 5 et 20 fois supérieurs, et
- les résistances de sécurité d'un premier mode montage et d'un deuxième montage différents l'un de l'autre par exemple d'une valeur de résistance présentant un rapport allant de 2 à 4,

permet au calculateur de détecter automatiquement quel est le montage électrique présent dans le volant de direction et d'assurer une sécurité optimale de la sélection du mode de conduite en détectant automatiquement les principales défaillances du montage électrique.

**Revendications**

1. Dispositif de sélection (1) du mode de conduite d'un véhicule automobile autonome, comprenant au moins un interrupteur de commande (10, 50), le dispositif (1) comprenant un calculateur (40) apte à détecter la pression dudit interrupteur (10, 50),
**caractérisé en ce que** le dispositif (1) inclut un montage électrique (100) dans lequel ledit interrupteur (10, 50) est connecté en série à une première résistance (11, 51), une résistance de sécurité (30) est connectée en parallèle dudit interrupteur (10, 50) et de ladite première résistance (11), ledit montage électrique est connecté d'une part à une source de tension continue (41) du calculateur (40) et d'autre part à une masse (42) du calculateur (40), de sorte que la résistance équivalente du montage électrique (100) permet de déterminer d'une part si l'interrupteur (10, 50) est fermé ou ouvert et d'autre part une potentielle défaillance dudit montage électrique (100).

2. Dispositif de sélection (1) selon la revendication 1, **caractérisé en ce que** ledit montage électrique (100) comprend un deuxième interrupteur (20) connecté en série avec une deuxième résistance (21), ledit deuxième interrupteur (20) et ladite deuxième résistance (21) étant connectés d'une part en parallèle du premier interrupteur (10) et de la première résistance, et d'autre part en parallèle de ladite résistance de sécurité (30), de sorte que la résistance équivalente du montage électrique (100) permet en outre de déterminer si le deuxième interrupteur (20) est fermé ou ouvert, simultanément ou non avec le premier interrupteur (10).

3. Dispositif de sélection (1) selon la revendication 1 ou 2 **caractérisé en ce qu'**il comporte des moyens permettant, lorsque la résistance équivalente est égale à la valeur de ladite résistance de sécurité (30), de détecter que les deux interrupteurs (10, 20) sont ouverts.

4. Dispositif de sélection (1) selon l'une quelconque des revendications 1 à 3,
**caractérisé en ce qu'**il comporte des moyens permettant, lorsque ladite résistance équivalente est égale à une valeur infinie, de détecter une défaillance liée à un circuit ouvert.

5. Dispositif de sélection (1) selon l'une quelconque des revendications 1 à 4,
**caractérisé en ce qu'**il comporte des moyens permettant ,lorsque la résistance équivalente est nulle, de détecter un court-circuit à la masse (42) ou à la source de tension continue (41).

6. Calculateur (40) embarqué dans un véhicule automobile autonome, adapté pour détecter, en fonction d'une valeur de résistance (Re) mesurée, si le dispositif de sélection connecté est un dispositif de sélection (1) selon la revendication 1 comprenant un seul interrupteur (50), ou si le dispositif de sélection connecté est un dispositif de sélection selon la revendication 2 comprenant deux interrupteurs (10, 20).

7. Volant de direction pour un véhicule automobile comprenant un calculateur embarqué (40) selon la revendication 6 et un dispositif de sélection selon l'une quelconque des revendications 1 à 5.

8. Véhicule automobile comprenant un volant de direction selon la revendication 7.


**Patentansprüche**

1. Auswahlvorrichtung (1) für den Fahrmodus eines autonomen Kraftfahrzeugs, die mindestens einen Betätigungsschalter (10, 50) umfasst, wobei die Vorrichtung (1) einen Rechner (40) umfasst, der geeignet ist, das Drücken des Schalters (10, 50) zu detektieren, **dadurch gekennzeichnet, dass** die Vorrichtung (1) eine elektrische Schaltung (100) einschließt, in welcher der Schalter (10, 50) in Reihe an einen ersten Widerstand (11, 51) angeschlossen ist, ein Sicherheitswiderstand (30) parallel zu dem Schalter (10, 50) und dem ersten Widerstand (11) angeschlossen ist, die elektrische Schaltung zum einen an eine Gleichspannungsquelle (41) des Rechners (40) und zum anderen an eine Masse (42) des Rechners (40) angeschlossen ist, so dass der äquivalente Widerstand der elektrischen Schaltung (100) es ermöglicht, zum einen zu bestimmen, ob der Schalter (10, 50) geschlossen oder offen ist, und zum anderen einen potentiellen Ausfall der elektrischen Schaltung (100) zu bestimmen.

2. Auswahlvorrichtung (1) nach Anspruch 1, **dadurch gekennzeichnet, dass** die elektrische Schaltung (100) einen zweiten Schalter (20) umfasst, der in Reihe mit einem zweiten Widerstand (21) angeschlossen ist, wobei der zweite Schalter (20) und der zweite Widerstand (21) zum einen parallel zu dem ersten Schalter (10) und dem ersten Widerstand und zum anderen parallel zu dem Sicherheitswiderstand (30) angeschlossen sind, so dass der äquivalente Widerstand der elektrischen Schaltung (100) es ferner ermöglicht zu bestimmen, ob der zweite Schalter (20) gleichzeitig mit dem ersten Schalter (10) geschlossen oder offen ist oder nicht.

3. Auswahlvorrichtung (1) nach Anspruch 1 oder 2, **dadurch gekennzeichnet, dass** sie Mittel beinhaltet, die es ermöglichen, wenn der äquivalente Widerstand gleich dem Wert des Sicherheitswiderstands (30) ist, zu detektieren, dass die beiden Schalter (10, 20) offen sind.

4. Auswahlvorrichtung (1) nach einem der Ansprüche 1 bis **3, dadurch gekennzeichnet, dass** sie Mittel beinhaltet, die es ermöglichen, wenn der äquivalente Widerstand gleich einem unendlichen Wert ist, einen mit einem offenen Stromkreis zusammenhängenden Ausfall zu detektieren.

5. Auswahlvorrichtung (1) nach einem der Ansprüche 1 bis 4, **dadurch gekennzeichnet, dass** sie Mittel beinhaltet, die es ermöglichen, wenn der äquivalente Widerstand null ist, einen Kurzschluss zur Masse (42) oder zur Gleichspannungsquelle (41) zu detektieren.

6. Rechner (40), der in ein autonomes Kraftfahrzeug integriert ist und dazu angepasst ist, in Abhängigkeit von einem gemessenen Widerstandswert (Re) zu detektieren, ob die angeschlossene Auswahlvorrichtung eine Auswahlvorrichtung (1) nach Anspruch 1 ist, die einen einzigen Schalter (50) umfasst, oder ob die angeschlossene Auswahlvorrichtung eine Auswahlvorrichtung nach Anspruch 2 ist, die zwei Schalter (10, 20) umfasst.

7. Lenkrad für ein Kraftfahrzeug, das einen integrierten Rechner (40) nach Anspruch 6 und eine Auswahlvorrichtung nach einem der Ansprüche 1 bis 5 umfasst.

8. Kraftfahrzeug, das ein Lenkrad nach Anspruch 7 umfasst.

**Claims**

1. Device (1) for selecting the driving mode of an autonomous motor vehicle, comprising at least one control switch (10, 50), the device (1) comprising a computer (40) which is able to detect the pressing of said switch (10, 50), **characterized in that** the device (1) includes an electrical circuit (100) in which said switch (10, 50) is connected in series to a first resistor (11, 51), a safety resistor (30) is connected in parallel with said switch (10, 50) and with said first resistor (11), said electrical circuit is connected, on the one hand, to a DC voltage source (41) of the computer (40) and, on the other hand, to a ground (42) of the computer (40), so that the equivalent resistance of the electrical circuit (100) makes it possible to determine, on the one hand, whether the switch (10, 50) is closed or open and, on the other hand, a potential failure of said electrical circuit (100).

2. Selection device (1) according to Claim 1, **characterized in that** said electrical circuit (100) comprises a second switch (20) connected in series with a second resistor (21), said second switch (20) and said second resistor (21) being connected, on the one hand, in parallel with the first switch (10) and with the first resistor and, on the other hand, in parallel with said safety resistor (30), so that the equivalent resistance of the electrical circuit (100) further makes it possible to determine whether the second switch (20) is closed or open, simultaneously or not with the first switch (10).

3. Selection device (1) according to Claim 1 or 2, **characterized in that** it comprises means making it possible, when the equivalent resistance is equal to the value of said safety resistor (30), to detect that the two switches (10, 20) are open.

4. Selection device (1) according to any one of Claims 1 to 3, **characterized in that** it comprises means making it possible, when said equivalent resistance is equal to an infinite value, to detect a failure linked to an open circuit.

5. Selection device (1) according to any one of Claims 1 to 4, **characterized in that** it comprises means making it possible, when the equivalent resistance is zero, to detect a short circuit at the ground (42) or at the DC voltage source (41).

6. Computer (40) on board an autonomous motor vehicle, which is suited to detecting, depending on a measured resistance value (Re), whether the connected selection device is a selection device (1) according to Claim 1 comprising a single switch (50), or whether the connected selection device is a selection device according to Claim 2 comprising two switches (10, 20).

7. Steering wheel for a motor vehicle comprising an on-board computer (40) according to Claim 6 and a selection device according to any one of Claims 1 to 5.

8. Motor vehicle comprising a steering wheel according to Claim 7.

[Fig. 1]

[Fig. 2]

**EP 4 330 086 B1**

**RÉFÉRENCES CITÉES DANS LA DESCRIPTION**

**Documents brevets cités dans la description**

- EP 3240712 B1